# EUROPEAN PATENT APPLICATION

(11) **EP 3 960 431 A1**
(43) Date of publication of application: **02.03.2022**
(21) Application number: 21191505.3
(22) Date of filing: 16.08.2021
(51) Int. Cl.: B29C 73/16, B29C 73/22, B29D 30/06, B60C 19/12

(54) **SEALANT RUBBER COMPOSITION AND PNEUMATIC TIRE**

(30) Priority: 26.08.2020 JP 2020142736
(71) Applicant: SUMITOMO RUBBER INDUSTRIES LIMITED, Kobe-shi Hyogo-ken (JP)
(72) Inventor: Matsumoto, Norihiro, Kobe-shi, 651-0072 (JP)
(74) Representative: Manitz Finsterwald Patent- und Rechtsanwaltspartnerschaft mbB

(57) **Abstract**

Provided are sealant rubber compositions which have excellent fracture properties, good sealing performance after aging, and reduced changes in fracture properties over time, as well as pneumatic tires (self-sealing tires) including the rubber compositions. Included are sealant rubber compositions containing 100 parts by mass of at least one butyl-based rubber, 2 to 15 parts by mass of at least one zinc oxide, and 100 to 300 parts by mass of at least one liquid polymer, wherein the amounts of thiuram vulcanization accelerators, dithiocarbamate vulcanization accelerators, and sulfur are each 0.1 parts by mass or less per 100 parts by mass of the at least one butyl-based rubber.

## Description

### TECHNICAL FIELD

The present invention relates to sealant rubber compositions and pneumatic tires including the rubber compositions.

### BACKGROUND ART

Self-sealing tires with sealants applied to the inner peripheries of the tires are known as puncture resistant pneumatic tires (hereinafter, pneumatic tires are also referred to simply as tires). The sealants automatically seal puncture holes formed in the self-sealing tires. Various studies have been made on such sealants.

Conventional sealants have been crosslinked using combinations of zinc oxide, thiuram vulcanization accelerators, and sulfur (for example, Patent Literature 1).

### CITATION LIST

### PATENT LITERATURE

Patent Literature 1: WO 2017/094653

### SUMMARY OF INVENTION

### TECHNICAL PROBLEM

However, studies by the present inventor have shown that such crosslinking has a problem in that thermally less stable sulfur bridges are formed, resulting in insufficient sealing performance after aging.

Moreover, some conventional sealants are crosslinked using peroxides such as organic peroxides. However, studies by the present inventor have shown that the conventional sealants crosslinked using peroxides such as organic peroxides can have a non-uniform crosslinked structure due to the difficulty in controlling the crosslinking reactions, and thus there is room for improvement in terms of fracture properties required for sealants. Another problem found is that since the crosslinking reactions using peroxides such as organic peroxides proceed slowly, the crosslinking reactions may not have been completed even during the storage or use after the production, resulting in insufficient sealing performance after aging.

The present invention aims to solve the above problems and provide sealant rubber compositions which have excellent fracture properties, good sealing performance after aging, and reduced changes in fracture properties over time, as well as pneumatic tires (self-sealing tires) including the rubber compositions.

### SOLUTION TO PROBLEM

The present invention relates to sealant rubber compositions, containing: 100 parts by mass of at least one butyl-based rubber; 2 to 15 parts by mass of at least one zinc oxide; and 100 to 300 parts by mass of at least one liquid polymer, wherein amounts of thiuram vulcanization accelerators, dithiocarbamate vulcanization accelerators, and sulfur are each 0.1 parts by mass or less per 100 parts by mass of the at least one butyl-based rubber.

Preferably, the liquid polymer is at least one liquid polybutene.

Preferably, the liquid polymer has a kinematic viscosity of 500 to 6,000 cSt as measured at 100°C in accordance with ASTM D445.

Preferably, an amount of organic peroxides is 1 part by mass or less per 100 parts by mass of the at least one butyl-based rubber in the rubber compositions.

The present invention also relates to pneumatic tires (self-sealing tires), including a sealant layer formed from any of the rubber compositions.

Preferably, the sealant layer has a complex modulus G* of 0.75 to 3.50 kPa as measured at 100°C in accordance with ISO 13145.

### ADVANTAGEOUS EFFECTS OF INVENTION

The sealant rubber compositions of the present invention contain 100 parts by mass of at least one butyl-based rubber, 2 to 15 parts by mass of at least one zinc oxide, and 100 to 300 parts by mass of at least one liquid polymer and, further, the amounts of thiuram vulcanization accelerators, dithiocarbamate vulcanization accelerators, and sulfur are each 0.1 parts by mass or less per 100 parts by mass of the at least one butyl-based rubber. Thus, the present invention provides sealant rubber compositions which have excellent fracture properties, good sealing performance after aging, and reduced changes in fracture properties over time, as well as pneumatic tires (self-sealing tires) including the rubber compositions.

### BRIEF DESCRIPTION OF DRAWINGS

Fig. 1 is a schematic view illustrating an example of an applicator used in a method for producing a self-sealing tire.
Fig. 2 is an enlarged illustration of the vicinity of the tip of the nozzle included in the applicator shown in Fig. 1.
Fig. 3 is a schematic view illustrating the positional relationship of the nozzle to a tire.
Fig. 4 is a schematic view illustrating an example of a generally string-shaped sealant continuously and spirally attached to an inner periphery of a tire.
Figs. 5A and 5B are enlarged illustrations of the vicinity of the tip of the nozzle included in the applicator shown in Fig. 1.
Fig. 6 is a schematic view illustrating an example of a sealant attached to a self-sealing tire.
Fig. 7 is a schematic view illustrating an example of a production facility used in a method for producing a self-sealing tire.
Fig. 8 is a schematic view illustrating an example of a cross-section of the sealant of Fig. 4 cut along the A-A straight line orthogonal to the direction (longitudinal direction) along which the sealant is applied.
Fig. 9 is a schematic view illustrating an example of a cross-section of a pneumatic tire.

### DESCRIPTION OF EMBODIMENTS

The sealant rubber compositions (sealants) of the present invention contain 100 parts by mass of at least one butyl-based rubber, 2 to 15 parts by mass of at least one zinc oxide, and 100 to 300 parts by mass of at least one liquid polymer and, further, the amounts of thiuram vulcanization accelerators, dithiocarbamate vulcanization accelerators, and sulfur are each 0.1 parts by mass or less per 100 parts by mass of the at least one butyl-based rubber. Such rubber compositions have excellent (initial) fracture properties, good sealing performance after aging, and reduced changes in fracture properties over time.

The rubber compositions provide the above-mentioned effect. The reason for this advantageous effect is not exactly clear, but is believed to be as follows.

Using one or more butyl-based rubbers together with zinc oxide but substantially no thiuram vulcanization accelerator, dithiocarbamate vulcanization accelerator, and sulfur ensures good fracture properties and further provides good sealing performance after aging and a reduced change in fracture properties over time. This is believed to be because the crosslinking reaction in the above crosslinking system can be easily controlled to form a more uniform crosslinked structure which ensures good fracture properties, and also because the crosslinking reaction proceeds rapidly, rather than slowly, to completion, and highly thermally stable crosslinked chains are formed, thus providing good sealing performance after aging and a reduced change in fracture properties over time.

Moreover, by incorporating the predetermined amount of liquid polymers into the butyl-based rubbers, it is possible to more uniformly disperse the predetermined amount of zinc oxide in the compositions, resulting in a more uniform crosslinked structure which provides good fracture properties as well as good sealing performance after aging and a reduced change in fracture properties over time.

Thus, the compositions have excellent fracture properties, good sealing performance after aging, and reduced changes in fracture properties over time due to the synergistic effect of the predetermined amount of zinc oxide and the predetermined amount of liquid polymers.

The sealant rubber compositions (sealants) of the present invention may be applied to inner peripheral portions of self-sealing tires which can be punctured, such as treads. The sealants will be explained below while describing suitable exemplary methods for the production of self-sealing tires.

Self-sealing tires may be produced, for example, by preparing a sealant by mixing the components of the sealant, and then attaching the sealant to an inner periphery of a tire by application or other means to form a sealant layer. The self-sealing tires include the sealant layer located radially inside the innerliner.

Suitable exemplary methods for the production of self-sealing tires are described below.

Self-sealing tires may be produced, for example, by preparing a sealant by mixing the components of the sealant, and then attaching the sealant to an inner periphery of a tire by application or other means to form a sealant layer. The self-sealing tires include the sealant layer located radially inside the innerliner.

Any sealant that shows adhesion may be used, including rubber compositions usually used to seal tire punctures. One or more butyl-based rubbers are used as rubber components constituting main ingredients of the rubber compositions. This tends to provide moderate fluidity while ensuring good resistance to air penetration and to degradation. Examples of the butyl-based rubbers include butyl rubbers (IIR) and halogenated butyl rubbers (X-IIR) such as brominated butyl rubbers (Br-IIR) and chlorinated butyl rubbers (Cl-IIR). These may be used alone or in combinations of two or more. Halogenated butyl rubbers are preferred among these because the halogenated butyl rubbers are more likely to undergo crosslinking reactions to increase the crosslink density compared to non-halogenated butyl rubbers, and therefore the advantageous effect can be more suitably achieved. Brominated butyl rubbers are more preferred because they are more effective in accelerating crosslinking reactions, and thus the advantageous effect can be more suitably achieved.

To more suitably ensure the fluidity of the sealants, the Mooney viscosity ML₁₊₈ at 125°C of the butyl-based rubbers is preferably 20 or higher, more preferably 40 or higher, but is preferably 60 or lower. When the Mooney viscosity is within the range indicated above, the advantageous effect tends to be more suitably achieved.

The Mooney viscosity ML₁₊₈ at 125°C is determined in accordance with JIS K-6300-1:2001 at a test temperature of 125°C using an L-type rotor with a preheating time of one minute and a rotor rotation time of eight minutes.

The halogen content of the halogenated butyl rubbers is preferably 0.1% by mass or higher, more preferably 0.5% by mass or higher, but is preferably 5.0% by mass or lower, more preferably 4.0% by mass or lower. This can be more suitably effective in accelerating crosslinking reactions, so that the advantageous effect tends to be more suitably achieved.

The halogen content can be measured by solution NMR.

The butyl-based rubbers may be commercially available from Exxon Mobil Corporation, Japan Butyl Co., Ltd., JSR Corporation, Cenway, etc.

The amount of the butyl-based rubbers based on 100% by mass of the rubber components is preferably 80% by mass or more, more preferably 90% by mass or more, and may be 100% by mass. When the amount is within the range indicated above, the advantageous effect tends to be more suitably achieved.

In addition to the above-mentioned rubber components, additional rubber components may also be used, including diene rubbers such as natural rubbers (NR), polyisoprene rubbers (IR), polybutadiene rubbers (BR), styrene-butadiene rubbers (SBR), styrene-isoprene-butadiene rubbers (SIBR), ethylene-propylene-diene rubbers (EPDM), chloroprene rubbers (CR), and acrylonitrile-butadiene rubbers (NBR). These may be used alone or in combinations of two or more.

For example, rubber components which contain at least one metal-coordinating functional group in the molecular structure can be suitably used. Any functional group capable of coordinating a metal may be used, and examples include functional groups containing metal-coordinating atoms such as oxygen, nitrogen, and sulfur. Specific examples include a dithiocarbamic acid group, a phosphoric acid group, a carboxylic acid group, a carbamic acid group, a dithioic acid group, an aminophosphoric acid group, and a thiol group. Only one type or two or more types of the functional groups may be present.

Examples of metals that coordinate with the functional groups include Fe, Cu, Ag, Co, Mn, Ni, Ti, V, Zn, Mo, W, Os, Mg, Ca, Sr, Ba, Al, and Si. For example, in the case of a polymeric material that includes a compound containing such a metal atom (M1) and also contains a metal-coordinating functional group (e.g., -COO), -COOM1 groups are formed by coordinate bonding so that many -COOM1 groups are overlapped to form a cluster of aggregated metal atoms. The amount of such metal atoms (M1) incorporated per 100 parts by mass of the rubber components is preferably 0.01 to 200 parts by mass.

The rubber components may be commercially available from Sumitomo Chemical Co., Ltd., Ube Industries, Ltd., JSR Corporation, Asahi Kasei Corporation, Zeon Corporation, etc.

The sealants contain one or more liquid polymers. This can more suitably ensure moderate fluidity. As described earlier, by incorporating the predetermined amount of liquid polymers into the butyl-based rubbers, it is possible to more uniformly disperse the predetermined amount of zinc oxide in the compositions, resulting in excellent fracture properties, good sealing performance after aging, and a reduced change in fracture properties over time.

Examples of the liquid polymers used in the sealants include liquid polybutenes, liquid polyisobutenes, liquid polyisoprenes, liquid polybutadienes, liquid poly-α-olefins, liquid polyisobutylenes, liquid ethylene-α-olefin copolymers, liquid ethylene-propylene copolymers, and liquid ethylene-butylene copolymers. Liquid polybutenes are preferred among these because they have high compatibility with butyl-based rubbers, and thus the advantageous effect can be more suitably achieved. Examples of the liquid polybutenes include copolymers having a long-chain hydrocarbon molecular structure which is based on isobutene and further reacted with normal butene. Hydrogenated liquid polybutenes can also be used. These liquid polymers may be used alone or in combinations of two or more.

The kinematic viscosity at 100°C of the liquid polymers (e.g., liquid polybutenes) is preferably 500 cSt or higher, more preferably 580 cSt or higher, still more preferably 3,000 cSt or higher, but is preferably 6,000 cSt or lower, more preferably 5,500 cSt or lower, still more preferably 5,000 cSt or lower. When the kinematic viscosity at 100°C is within the range indicated above, the advantageous effect tends to be more suitably achieved.

The kinematic viscosity at 40°C of the liquid polymers (e.g., liquid polybutenes) is preferably 15,000 cSt or higher, more preferably 20,000 cSt or higher, still more preferably 25,000 cSt or higher, particularly preferably 50,000 cSt or higher, most preferably 100,000 cSt or higher, but is preferably 250,000 cSt or lower, more preferably 200,000 cSt or lower, still more preferably 180,000 cSt or lower. When the kinematic viscosity at 40°C is within the range indicated above, the advantageous effect tends to be more suitably achieved.

The kinematic viscosity values are measured at 40°C or 100°C in accordance with ASTM D445 (2019).

The liquid polymers may be commercially available from ENEOS Corporation, NOF Corporation, DAELIM, KEMAT, INEOS, etc.

The amount of the liquid polymers per 100 parts by mass of the butyl-based rubbers is 100 parts by mass or more, more preferably 120 parts by mass or more, still more preferably 140 parts by mass or more, particularly preferably 160 parts by mass or more, most preferably 180 parts by mass or more, but is 300 parts by mass or less, more preferably 280 parts by mass or less, still more preferably 260 parts by mass or less, particularly preferably 240 parts by mass or less, most preferably 220 parts by mass or less. When the amount is within the range indicated above, the advantageous effect tends to be more suitably achieved. When the amount of the liquid polymers is less than 100 parts by mass, sealing performance after aging cannot be secured, while when the amount is more than 300 parts by mass, the resulting sealant may be too soft and have low fracture properties, and also cannot maintain the shape.

In particular, it is preferred to use as the liquid polymer a single liquid polymer, preferably liquid polybutene, having kinematic viscosities at 100°C and 40°C within the respective ranges indicated above in the amount indicated above. By the use of such a type of liquid polymer in such an amount, the advantageous effect can be more suitably achieved.

The compositions contain one or more types of zinc oxide as a crosslinking agent.

The zinc oxide may be conventional ones, and commercial products available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc. may be used. These may be used alone or in combinations of two or more.

The amount of the zinc oxide per 100 parts by mass of the butyl-based rubbers is 2 parts by mass or more, preferably 4 parts by mass or more, more preferably 6 parts by mass or more, still more preferably 7 parts by mass or more, but is 15 parts by mass or less, preferably 13 parts by mass or less, more preferably 11 parts by mass or less, still more preferably 10 parts by mass or less. When the amount is within the range indicated above, the advantageous effect tends to be more suitably achieved. When the amount of the zinc oxide is less than 2 parts by mass, the crosslinking reaction may not sufficiently proceed, so that the resulting sealant may be too soft and have low fracture properties, and also cannot maintain the shape, while when the amount is more than 15 parts by mass, sealing performance after aging cannot be secured.

Thiuram vulcanization accelerators, dithiocarbamate vulcanization accelerators, and sulfur are not substantially used in the compositions.

Examples of the thiuram vulcanization accelerators include tetramethylthiuram disulfide (TMTD), tetrabenzylthiuram disulfide (TBzTD), tetrakis(2-ethylhexyl)thiuram disulfide (TOT-N), tetramethylthiuram monosulfide, dipentamethylenethiuram tetrasulfide, tetrabutylthiuram disulfide, and tetraethylthiuram disulfide.

The amount of the thiuram vulcanization accelerators per 100 parts by mass of the butyl-based rubbers is 0.1 parts by mass or less, preferably 0.01 parts by mass or less, more preferably 0 parts by mass. When the amount is within the range indicated above, the advantageous effect tends to be more suitably achieved.

Examples of the dithiocarbamate vulcanization accelerators include zinc dimethyldithiocarbamate (ZnMDC), zinc diethyldithiocarbamate (ZnEDC), zinc dibutyldithiocarbamate (ZnBDC), zinc ethylphenyldithiocarbamate (ZnEPDC), piperidinium pentamethylene dithiocarbamate (PPDC), tellurium diethyldithiocarbamate (TeEDC), sodium dimethyldithiocarbamate (NaMDC), sodium diethyldithiocarbamate (NaEDC), and sodium dibutyldithiocarbamate (NaBDC).

The amount of the dithiocarbamate vulcanization accelerators per 100 parts by mass of the butyl-based rubbers is 0.1 parts by mass or less, preferably 0.01 parts by mass or less, more preferably 0 parts by mass. When the amount is within the range indicated above, the advantageous effect tends to be more suitably achieved.

Examples of the sulfur include powdered sulfur, precipitated sulfur, colloidal sulfur, insoluble sulfur, and highly dispersible sulfur.

The sulfur may be commercially available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd, etc.

The amount of the sulfur per 100 parts by mass of the butyl-based rubbers is 0.1 parts by mass or less, preferably 0.01 parts by mass or less, more preferably 0 parts by mass. When the amount is within the range indicated above, the advantageous effect tends to be more suitably achieved.

Herein, the amount of the sulfur refers to the amount of the sulfur derived from pure sulfur components such as powdered sulfur and does not include the amount of the sulfur derived from sulfur-containing compounds such as phenol/sulfur chloride condensates.

It is preferred not to use conventional and common organic peroxides and the like as crosslinking agents.

Examples of such organic peroxides include acyl peroxides such as benzoyl peroxide, dibenzoyl peroxide, and p-chlorobenzoyl peroxide; peroxy esters such as 1-butyl peroxyacetate, t-butyl peroxybenzoate, and t-butyl peroxyphthalate; ketone peroxides such as methyl ethyl ketone peroxide; alkyl peroxides such as di-t-butyl peroxybenzoate and 1,3-bis(1-butylperoxyisopropyl)benzene; hydroperoxides such as t-butyl hydroperoxide; dicumyl peroxide; and t-butylcumyl peroxide.

The organic peroxides may be commercially available from NOF Corporation, Arkema, Kawaguchi Chemical Co., Ltd., Nouryon, etc.

The amount of the organic peroxides per 100 parts by mass of the butyl-based rubbers is preferably 1 part by mass or less, more preferably 0.5 parts by mass or less, still more preferably 0.1 parts by mass or less, particularly preferably 0.01 parts by mass or less, most preferably 0 parts by mass. When the amount is within the range indicated above, the advantageous effect tends to be more suitably achieved.

Thiazole vulcanization accelerators, guanidine vulcanization accelerators, and sulfenamide vulcanization accelerators may be used as crosslinking aids (vulcanization accelerators). These may be used alone or in combinations of two or more.

Examples of the thiazole vulcanization accelerators include 2-mercaptobenzothiazole (MBT), sodium, zinc, copper, or cyclohexylamine salts of 2-mercaptobenzothiazole, dibenzothiazyldisulfide (MBTS), 2-(2,4-dinitrophenyl)mercaptobenzothiazole, 2-(2,6-diethyl-4-morpholinothio)benzothiazole, and 2-(4'-morpholinyldithio)benzothiazole. These may be used alone or in combinations of two or more. To more suitably achieve the advantageous effect, dibenzothiazyldisulfide (MBTS) and 2-mercaptobenzothiazole (MBT) are preferred among these, with dibenzothiazyldisulfide (MBTS) being more preferred.

Examples of the guanidine vulcanization accelerators include diphenylguanidine, diorthotolylguanidine, and triphenylguanidine. These may be used alone or in combinations of two or more. To more suitably achieve the advantageous effect, diphenylguanidine is preferred among these.

Examples of the sulfenamide vulcanization accelerators include N-tert-butyl-2-benzothiazolylsulfenamide (TBBS), N-cyclohexyl-2-benzothiazolylsulfenamide (CBS), and N,N'-dicyclohexyl-2-benzothiazolylsulfenamide (DZ). These may be used alone or in combinations of two or more. To more suitably achieve the advantageous effect, N-tert-butyl-2-benzothiazolylsulfenamide is preferred among these.

The crosslinking aids (vulcanization accelerators) may be commercially available from Ouchi Shinko Chemical Industrial Co., Ltd., Kawaguchi Chemical Industry Co., Ltd., Sanshin Chemical Industry Co., Ltd., etc.

The amount of the thiazole vulcanization accelerators, guanidine vulcanization accelerators, and/or sulfenamide vulcanization accelerators per 100 parts by mass of the butyl-based rubbers is preferably 1 part by mass or more, more preferably 2 parts by mass or more, still more preferably 3 parts by mass or more, particularly preferably 4 parts by mass or more, but is preferably 10 parts by mass or less, more preferably 8 parts by mass or less, still more preferably 7 parts by mass or less, particularly preferably 6 parts by mass or less. When the amount is within the range indicated above, the advantageous effect tends to be more suitably achieved.

Herein, the amount of the thiazole vulcanization accelerators, guanidine vulcanization accelerators, and/or sulfenamide vulcanization accelerators refers to the amount of the single vulcanization accelerator when they are used alone, or the combined amount of the vulcanization accelerators when two or more of them are used in combination.

It is preferred not to use quinone dioxime compounds (quinoid compounds) which are conventional and common crosslinking aids (vulcanization accelerators).

Examples of such quinone dioxime compounds include p-benzoquinone dioxime, p-quinone dioxime, p-quinone dioxime diacetate, p-quinone dioxime dicaproate, p-quinone dioxime dilaurate, p-quinone dioxime distearate, p-quinone dioxime dicrotonate, p-quinone dioxime dinaphthenate, p-quinone dioxime succinate, p-quinone dioxime adipate, p-quinone dioxime difuroate, p-quinone dioxime dibenzoate, p-quinone dioxime di(o-chlorobenzoate), p-quinone dioxime di(p-chlorobenzoate), p-quinone dioxime di(p-nitrobenzoate), p-quinone dioxime di(m-nitrobenzoate), p-quinone dioxime di(3,5-dinitrobenzoate), p-quinone dioxime di(p-methoxybenzoate), p-quinone dioxime di(n-amyloxybenzoate), and p-quinone dioxime di(m-bromobenzoate).

The quinone dioxime compounds may be commercially available from FUJIFILM Wako Pure Chemical Corporation, Junsei Chemical Co., Ltd., Ouchi Shinko Chemical Industrial Co., Ltd., Lord Corporation, etc.

The amount of the quinone dioxime compounds per 100 parts by mass of the butyl-based rubbers is preferably 1 part by mass or less, more preferably 0.5 parts by mass or less, still more preferably 0.1 parts by mass or less, particularly preferably 0.01 parts by mass or less, most preferably 0 parts by mass. When the amount is within the range indicated above, the advantageous effect tends to be more suitably achieved.

The rubber compositions may contain one or more types of stearic acid.

The stearic acid may be conventional ones, and commercial products available from NOF Corporation, Kao Corporation, FUJIFILM Wako Pure Chemical Corporation, Chiba Fatty Acid Co., Ltd., etc. may be used. These may be used alone or in combinations of two or more.

The amount of the stearic acid per 100 parts by mass of the butyl-based rubbers is preferably 0.1 parts by mass or more, more preferably 0.5 parts by mass or more, but is preferably 10 parts by mass or less, more preferably 6 parts by mass or less, still more preferably 3 parts by mass or less. When the amount is within the range indicated above, the advantageous effect tends to be better achieved.

Inorganic fillers such as carbon black, silica, barium sulfate, talc, mica, and mM2·xSiOy·zH₂O wherein M2 represents at least one metal selected from the group consisting of aluminum, calcium, magnesium, titanium, and zirconium, or an oxide, hydroxide, hydrate, or carbonate of the metal; m represents a number of 1 to 5; x represents a number of 0 to 10; y represents a number of 2 to 5; and z represents a number of 0 to 10, and plasticizers such as aromatic process oils, naphthenic process oils, and paraffinic process oils may be added to the rubber compositions. These may be used alone or in combinations of two or more.

Specific examples of the fillers represented by mM2·xSiOy·zH₂O include aluminum hydroxide (Al(OH)₃), alumina (e.g., Al₂O₃, Al₂O₃·3H₂O (hydrate)), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminum silicate (e.g., Al₂SiO₅, Al₄(SiO₂)₃·5H₂O), calcium aluminum silicate (Al₂O₃·CaO·2SiO₂), calcium hydroxide (Ca(OH)₂), calcium oxide (CaO), calcium silicate (Ca₂SiO₄), magnesium calcium silicate (CaMgSiO₄), magnesium hydroxide (Mg(OH)₂), magnesium oxide (MgO), talc (MgO·4SiO₂·H₂O), attapulgite (5MgO·8SiO₂·9H₂O), aluminum magnesium oxide (MgO·Al₂O₃), titanium white (TiO₂), and titanium black (TiₙO₂ₙ₋₁). These may be used alone or in combinations of two or more.

The inorganic fillers may be commercially available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, Degussa, Rhodia, Tosoh Silica Corporation, Solvay Japan, Tokuyama Corporation, etc.

The plasticizers may be commercially available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., The Nisshin Oillio Group, Ltd., Taoka Chemical Co., Ltd., etc.

The amount of the inorganic fillers per 100 parts by mass of the butyl-based rubbers is preferably 1 part by mass or more, more preferably 10 parts by mass or more, still more preferably 20 parts by mass or more, but is preferably 50 parts by mass or less, more preferably 40 parts by mass or less. When the amount is within the range indicated above, the advantageous effect tends to be more suitably achieved.

Carbon black is preferred as an inorganic filler in order to prevent degradation by ultraviolet rays and to more suitably ensure appropriate reinforcement while ensuring good elongation at break. In this case, the amount of the carbon black per 100 parts by mass of the butyl-based rubbers is preferably 1 part by mass or more, more preferably 10 parts by mass or more, still more preferably 20 parts by mass or more, but is preferably 50 parts by mass or less, more preferably 40 parts by mass or less. When the amount is within the range indicated above, the advantageous effect tends to be more suitably achieved.

Any appropriate carbon black commonly used in rubber applications may be used. Specific suitable examples include N110, N115, N120, N121, N125, N134, N135, N219, N220, N231, N234, N293, N299, N326, N330, N335, N339, N343, N347, N351, N356, N358, N375, N539, N550, N582, N630, N642, N650, N660, N683, N754, N762, N765, N772, N774, N787, N907, N908, N990, and N991. Other suitable examples include in-house synthesized products. These may be used alone or in combinations of two or more.

Dioctyl phthalate (DOP) is preferred as a plasticizer (oil) because a lower softening point is better to maintain the softness at low temperatures.

Herein, the plasticizers do not include the above-described liquid polymers.

The amount of the plasticizers per 100 parts by mass of the butyl-based rubbers is preferably 15 parts by mass or more, more preferably 20 parts by mass or more, but is preferably 40 parts by mass or less, more preferably 30 parts by mass or less.

The rubber compositions may contain one or more thermoplastic resins as tackifiers.

Specific examples of the thermoplastic resins include rosin resins such as gum rosins, tall oil rosins, wood rosins, hydrogenated rosins, disproportionated rosins, polymerized rosins, and glycerol or pentaerythritol esters of modified rosins; terpene resins such as α-pinene, β-pinene, or dipentene terpene resins, aromatic modified terpene resins, terpene phenol resins, and hydrogenated terpene resins; and petroleum resins, including aliphatic petroleum resins produced by polymerization or copolymerization of C5 fractions obtained by thermal cracking of naphtha, aromatic petroleum resins produced by polymerization or copolymerization of C9 fractions obtained by thermal cracking of naphtha, copolymerized petroleum resins produced by copolymerization of the C5 fractions and the C9 fractions, alicyclic compound-based petroleum resins such as hydrogenated or dicyclopentadiene petroleum resins; and styrene resins such as polymers of styrene or substituted styrene, and copolymers of styrene with other monomers. These may be used alone or in combinations of two or more. To more suitably achieve the advantageous effect, aliphatic petroleum resins are preferred among these.

The thermoplastic resins may be commercially available from Zeon Corporation, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The amount of the thermoplastic resins per 100 parts by mass of the butyl-based rubbers is preferably 1 part by mass or more, more preferably 5 parts by mass or more, still more preferably 10 parts by mass or more, but is preferably 50 parts by mass or less, more preferably 40 parts by mass or less. When the amount is within the range indicated above, the advantageous effect tends to be more suitably achieved.

In addition to the above-mentioned components, the rubber compositions may further contain additives commonly used in the tire industry, such as silane coupling agents and various types of antioxidants. The amount of each of the additives per 100 parts by mass of the butyl-based rubbers is preferably 0.1 to 200 parts by mass.

The sealant rubber compositions (sealants) are preferably prepared by mixing the butyl-based rubber(s), the predetermined amount of zinc oxide, and the predetermined amount of liquid polymer(s), and more preferably by mixing the butyl-based rubber(s), the predetermined amount of zinc oxide, and the predetermined amount of polybutene(s).

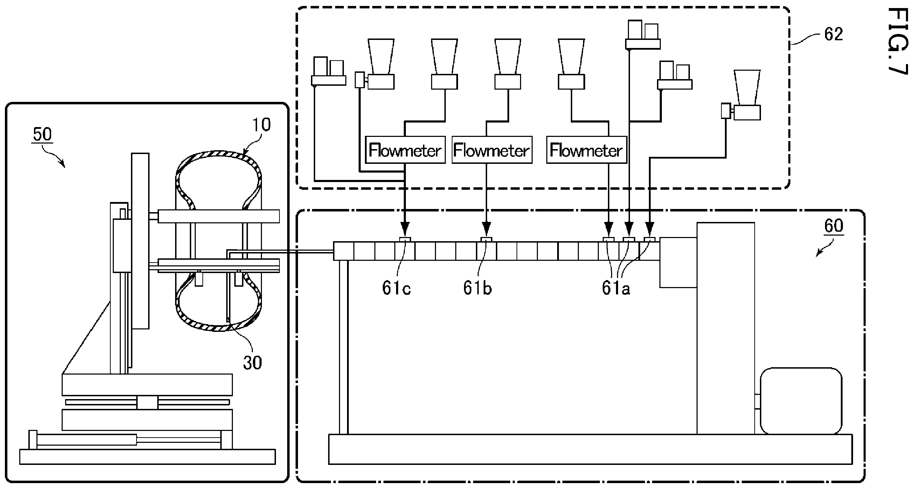

Self-sealing tires including a sealant layer located radially inside an innerliner may be produced by preparing a sealant by mixing the aforementioned materials, followed by applying the sealant to an inner periphery of a tire, preferably a radially inner side of the innerliner. The materials of the sealant may be mixed using a known kneading machine, for example. An example of a production facility used in a method for producing a self-sealing tire is shown in Fig. 7.

In the application of the sealant to an inner periphery of a tire, the sealant may be applied at least to a tire inner periphery that corresponds to a tread portion, and preferably at least to a tire inner periphery that corresponds to a breaker. Omitting the application of the sealant to areas where the sealant is unnecessary further enhances the productivity of self-sealing tires.

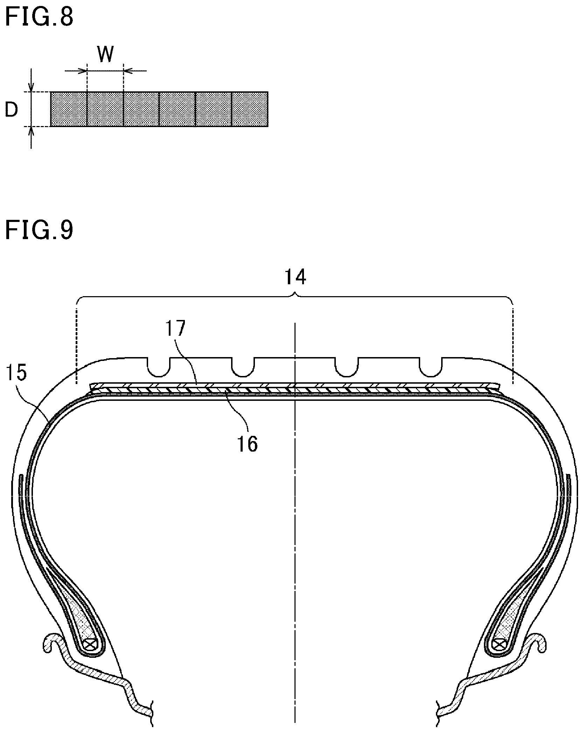

The term "tire inner periphery that corresponds to a tread portion" refers to an inner periphery of a tire that is located radially inside a tread portion of the tire which contacts the road surface. The term "tire inner periphery that corresponds to a breaker" refers to an inner periphery of a tire that is located radially inside a breaker of the tire. The term "breaker" refers to a component placed inside the tread and radially outside the carcass. Specifically, it is a component as shown as a breaker 16 in Fig. 9, for example.

An unvulcanized tire is usually vulcanized using a bladder. During the vulcanization of the tire, the bladder inflates and closely attaches to the inner periphery (innerliner) of the tire. Hence, a mold release agent has usually been applied to the inner periphery (innerliner) of the tire to avoid adhesion between the bladder and the tire inner periphery (innerliner) after completion of the vulcanization.

The mold release agent is usually a water-soluble paint or mold-releasing rubber. However, the presence of the mold release agent on the tire inner periphery may impair adhesion between the sealant and the tire inner periphery. For this reason, it is preferred to previously remove the mold release agent from the tire inner periphery. In particular, it is more preferred to previously remove the mold release agent at least from a portion of the tire inner periphery in which application of the sealant will start, and still more preferably from the entire area of the tire inner periphery where the sealant is to be applied. In this case, the sealant adheres better to the tire inner periphery so that a self-sealing tire having higher sealing performance can be produced.

The mold release agent may be removed from the tire inner periphery by any method, including known methods such as buffing treatment, laser treatment, high pressure water washing, and removal with detergents and preferably with neutral detergents.

By continuously and spirally attaching the sealant to the tire inner periphery, it is possible to prevent deterioration of tire uniformity to produce a self-sealing tire excellent in weight balance. Moreover, the continuous and spiral attachment of the sealant to the tire inner periphery enables formation of a sealant layer in which the sealant is uniformly provided in the circumferential and width directions (especially in the circumferential direction) of the tire. Thus, it is possible to stably produce self-sealing tires having excellent sealing performance with high productivity. The sealant is preferably attached without overlapping in the width direction and more preferably without gaps. In this case, the deterioration of tire uniformity can be further prevented and a more uniform sealant layer can be formed.

Moreover, the raw materials may be sequentially supplied to a continuous kneading machine (especially twin screw kneading extruder), by which a sealant may be sequentially prepared and then continuously discharged from the nozzle connected to the outlet of the continuous kneading machine (especially twin screw kneading extruder), to sequentially apply the sealant directly to an inner periphery of a tire. In this case, it is possible to produce self-sealing tires with high productivity.

The sealant layer is preferably formed by continuously and spirally applying a generally string-shaped sealant to an inner periphery of a tire. Thus, a sealant layer including a generally string-shaped sealant provided continuously and spirally along an inner periphery of a tire can be formed on the tire inner periphery. The sealant layer may be formed of layers of the sealant, but preferably consists of one layer of the sealant.

When the sealant has a generally string shape, a sealant layer consisting of one layer of the sealant may be formed by continuously and spirally applying the sealant to an inner periphery of a tire. In the case of the generally string-shaped sealant, since the applied sealant has a certain thickness, even a sealant layer consisting of one layer of the sealant can prevent deterioration of tire uniformity, thereby allowing for the production of a self-sealing tire having an excellent weight balance and good sealing performance. Moreover, since it is sufficient to only apply one layer of the sealant without stacking layers of the sealant, self-sealing tires can be produced with higher productivity.

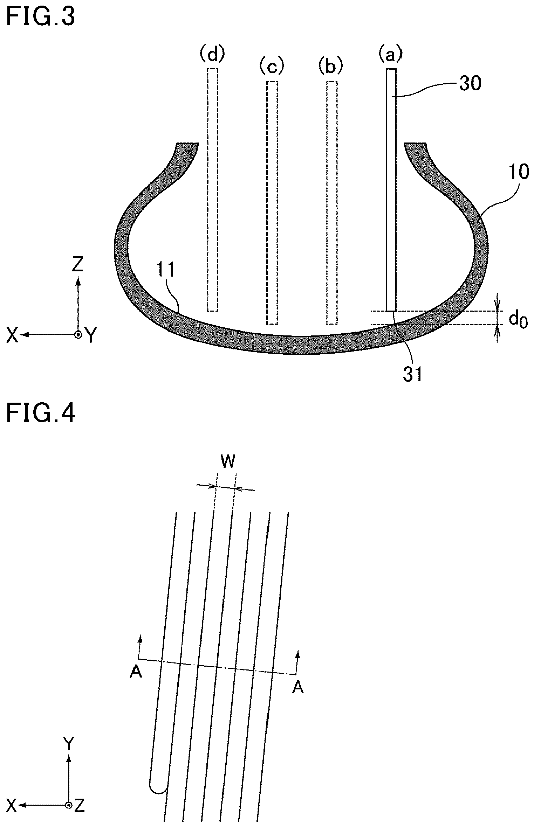

To prevent deterioration of tire uniformity to produce a self-sealing tire having an excellent weight balance and good sealing performance with higher productivity, the number of turns of the sealant around the inner periphery of the tire is preferably 20 or more, more preferably 35 or more, but is preferably 70 or less, more preferably 60 or less, still more preferably 50 or less. Here, two turns mean that the sealant is applied such that it makes two rounds around the inner periphery of the tire. In Fig. 4, the number of turns of the sealant is six.

The following describes methods for applying a sealant to an inner periphery of a tire.

### <First embodiment>

According to a first embodiment, self-sealing tires may be produced, for example, by performing the steps (1), (2), and (3) below in the process of applying an adhesive sealant through a nozzle to an inner periphery of a tire while rotating the tire and simultaneously moving the tire and/or nozzle in the width direction of the tire: step (1) of measuring the distance between the inner periphery of the tire and the tip of the nozzle using a non-contact displacement sensor; step (2) of moving the tire and/or nozzle in the radial direction of the tire according to the data to adjust the distance between the inner periphery of the tire and the tip of the nozzle to a predetermined distance; and step (3) of applying the sealant to the inner periphery of the tire at the adjusted distance.

The distance between the inner periphery of the tire and the tip of the nozzle may be maintained at a constant distance by measuring the distance between the inner periphery of the tire and the tip of the nozzle using a non-contact displacement sensor and feeding back the data. Moreover, as the sealant is applied to the tire inner periphery while maintaining the distance at a constant distance, the applied sealant has a uniform thickness without being affected by variations in tire shape and irregularities at joint or other portions. Furthermore, since it is not necessary to enter the coordinate data of each tire having a different size as in the conventional art, the sealant can be efficiently applied.

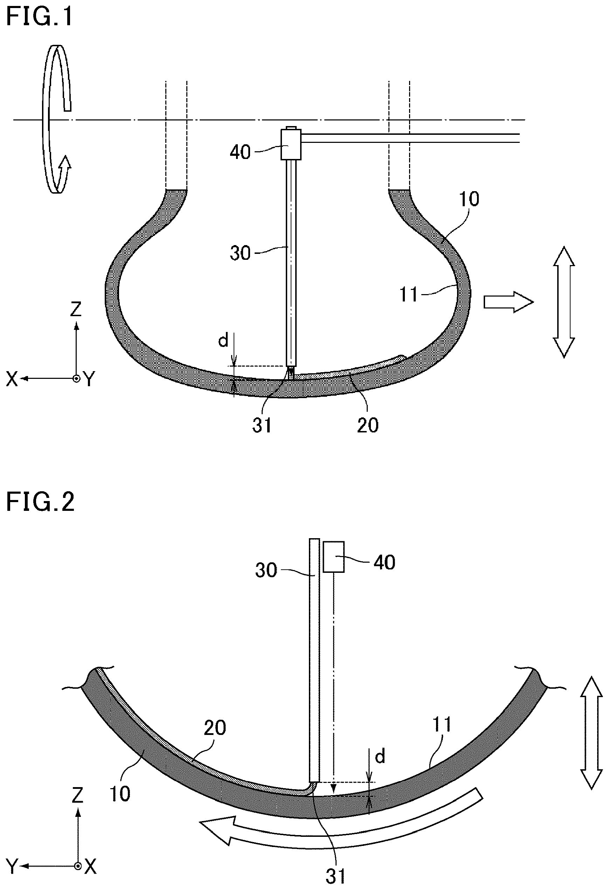

Fig. 1 is a schematic view illustrating an example of an applicator used in a method for producing a self-sealing tire, and Fig. 2 is an enlarged illustration of the vicinity of the tip of the nozzle included in the applicator shown in Fig. 1.

Fig. 1 shows a cross-section of a part of a tire 10 in the meridional direction (a cross-section taken along a plane including the width and radial directions of the tire). Fig. 2 shows a cross-section of a part of the tire 10 taken along a plane including the circumferential and radial directions of the tire. In Figs. 1 and 2, the width direction (axis direction) of the tire is indicated by arrow X, the circumferential direction of the tire is indicated by arrow Y, and the radial direction of the tire is indicated by arrow Z.

The tire 10 is mounted on a rotary drive device (not shown) which fixes and rotates the tire while moving the tire in the width and radial directions of the tire. The rotary drive device permits the following independent operations: rotation around the axis of the tire, movement in the width direction of the tire, and movement in the radial direction of the tire.

Moreover, the rotary drive device includes a controller (not shown) capable of controlling the amount of movement in the tire radial direction. The controller may be capable of controlling the amount of movement in the tire width direction and/or the rotational speed of the tire.

A nozzle 30 is attached to the tip of an extruder (not shown) and can be inserted into the inside of the tire 10. Then an adhesive sealant 20 extruded from the extruder is discharged from the tip 31 of the nozzle 30.

A non-contact displacement sensor 40 is attached to the nozzle 30 to measure the distance d between an inner periphery 11 of the tire 10 and the tip 31 of the nozzle 30.

Thus, the distance d to be measured by the non-contact displacement sensor is the distance in the tire radial direction between the inner periphery of the tire and the tip of the nozzle.

According to the method for producing a self-sealing tire of this embodiment, the tire 10 formed through a vulcanization step is first mounted on the rotary drive device, and the nozzle 30 is inserted into the inside of the tire 10. Then, as shown in Figs. 1 and 2, the tire 10 is rotated and simultaneously moved in the width direction while the sealant 20 is discharged from the nozzle 30, thereby continuously applying the sealant to the inner periphery 11 of the tire 10. The tire 10 is moved in the width direction according to the pre-entered profile of the inner periphery 11 of the tire 10.

The sealant 20 preferably has a generally string shape, as described later. More specifically, the sealant preferably maintains a generally string shape when it is applied to the inner periphery of the tire. In this case, the generally string-shaped sealant 20 is continuously and spirally attached to the inner periphery 11 of the tire 10.

The term "generally string shape" as used herein refers to a shape having a certain width, a certain thickness, and a length longer than the width. Fig. 4 schematically shows an example of a generally string-shaped sealant continuously and spirally attached to an inner periphery of a tire, and Fig. 8 schematically shows an example of a cross-section of the sealant of Fig. 4 cut along the A-A straight line orthogonal to the direction (longitudinal direction) along which the sealant is applied. Thus, the generally string-shaped sealant has a certain width (length indicated by W in Fig. 8) and a certain thickness (length indicated by D in Fig. 8). Here, the width of the sealant means the width of the applied sealant, and the thickness of the sealant means the thickness of the applied sealant, more specifically the thickness of the sealant layer.

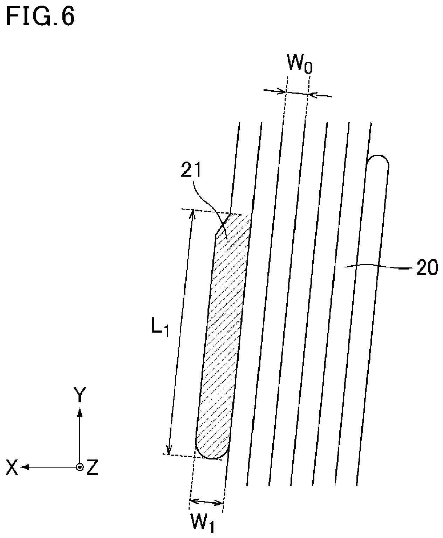

Specifically, the generally string-shaped sealant is a sealant having a thickness (thickness of the applied sealant or the sealant layer, length indicated by D in Fig. 8) satisfying a preferable numerical range and a width (width of the applied sealant, length indicated by W in Fig. 4 or W₀ in Fig. 6) satisfying a preferable numerical range as described later, and preferably having a ratio of the thickness to the width of the sealant (thickness of sealant/width of sealant) satisfying a preferable numerical range as described later. The generally string-shaped sealant is also a sealant having a cross-sectional area satisfying a preferable numerical range as described later.

According to the method for producing a self-sealing tire of this embodiment, the sealant is applied to an inner periphery of a tire by the following steps (1) to (3).

### <Step (1)>

As shown in Fig. 2, the distance d between the inner periphery 11 of the tire 10 and the tip 31 of the nozzle 30 before the application of the sealant 20 is measured with the non-contact displacement sensor 40. The measurement of the distance d is performed upon every application of the sealant 20 to the inner periphery 11 of each tire 10, and from the start to the end of application of the sealant 20.

### <Step (2)>

The distance d data is transmitted to the controller of the rotary drive device. According to the data, the controller controls the amount of movement in the tire radial direction so that the distance between the inner periphery 11 of the tire 10 and the tip 31 of the nozzle 30 is adjusted to a predetermined distance.

### <Step (3)>

As the sealant 20 is continuously discharged from the tip 31 of the nozzle 30, it is then applied to the inner periphery 11 of the tire 10 at the adjusted distance. Through the steps (1) to (3), the sealant 20 having a uniform thickness can be applied to the inner periphery 11 of the tire 10.

Fig. 3 is a schematic view illustrating the positional relationship of the nozzle to the tire.

As shown in Fig. 3, the sealant may be applied while maintaining the distance between the inner periphery 11 of the tire 10 and the tip 31 of the nozzle 30 at a predetermined distance (do) during the movement of the nozzle 30 to positions (a) to (d) relative to the tire 10.

To more suitably achieve the advantageous effect, the adjusted distance d₀ is preferably 0.3 mm or more, more preferably 1.0 mm or more, but is preferably 3.0 mm or less, more preferably 2.0 mm or less.

Herein, the adjusted distance d₀ refers to the distance in the tire radial direction between the inner periphery of the tire and the tip of the nozzle after it is adjusted in step (2).

Moreover, to more suitably achieve the advantageous effect, the adjusted distance d₀ is preferably 30% or less, more preferably 20% or less of the thickness of the applied sealant. The adjusted distance d₀ is also preferably 5% or more, more preferably 10% or more of the thickness of the applied sealant.

The thickness of the sealant (the thickness of the applied sealant or the sealant layer, length indicated by D in Fig. 8) is not limited. To more suitably achieve the advantageous effect, the thickness of the sealant is preferably 1.0 mm or more, more preferably 1.5 mm or more, still more preferably 2.0 mm or more, particularly preferably 2.5 mm or more, but is preferably 10 mm or less, more preferably 8.0 mm or less, still more preferably 5.0 mm or less. The thickness of the sealant may be controlled by varying the rotational speed of the tire, the velocity of movement in the tire width direction, the distance between the tip of the nozzle and the inner periphery of the tire, or other factors.

The thickness of the sealant (the thickness of the applied sealant or the sealant layer) is preferably substantially constant. In this case, the deterioration of tire uniformity can be further prevented to produce a self-sealing tire having a much better weight balance.

Herein, the substantially constant thickness means that the variation of the thickness is within a range of 90 to 110%, preferably 95 to 105%, more preferably 98 to 102%, still more preferably 99 to 101%.

In order to reduce clogging of the nozzle so that excellent operational stability can be obtained and to more suitably achieve the advantageous effect, a generally string-shaped sealant is preferably used and more preferably spirally attached to the inner periphery of the tire. However, a sealant not having a generally string shape may also be used and applied by spraying onto the tire inner periphery.

When a generally string-shaped sealant is used, the width of the sealant (the width of the applied sealant, length indicated by W in Fig. 4) is not limited. To more suitably achieve the advantageous effect, the width of the sealant is preferably 0.8 mm or more, more preferably 1.3 mm or more, still more preferably 1.5 mm or more, but is preferably 18 mm or less, more preferably 13 mm or less, still more preferably 9.0 mm or less, particularly preferably 7.0 mm or less, most preferably 6.0 mm or less, even most preferably 5.0 mm or less.

The ratio of the thickness of the sealant (the thickness of the applied sealant or the sealant layer, length indicated by D in Fig. 8) to the width of the sealant (the width of the applied sealant, length indicated by W in Fig. 4) (thickness of sealant/width of sealant) is preferably 0.6 or higher, more preferably 0.7 or higher, still more preferably 0.8 or higher, particularly preferably 0.9 or higher, but is preferably 1.4 or lower, more preferably 1.3 or lower, still more preferably 1.2 or lower, particularly preferably 1.1 or lower. With a ratio closer to 1.0, the sealant has an ideal string shape which permits production of a self-sealing tire having high sealing performance with higher productivity.

To more suitably achieve the advantageous effect, the cross-sectional area of the sealant (the cross-sectional area of the applied sealant, area calculated by D × W in Fig. 8) is preferably 0.8 mm² or more, more preferably 1.95 mm² or more, still more preferably 3.0 mm² or more, particularly preferably 3.75 mm² or more, but is preferably 180 mm² or less, more preferably 104 mm² or less, still more preferably 45 mm² or less, particularly preferably 35 mm² or less, most preferably 25 mm² or less.

The width of the area where the sealant is attached (hereinafter also referred to as the width of the attachment area or the sealant layer, and corresponding to a length equal to 6 × W in Fig. 4 or a length equal to W₁ + 6 × W₀ in Fig. 6) is not limited. To more suitably achieve the advantageous effect, the width is preferably 80% or more, more preferably 90% or more, still more preferably 100% or more, but preferably 120% or less, more preferably 110% or less, of the tread contact width.

To more suitably achieve the advantageous effect, the width of the sealant layer is preferably 85 to 115% of the width of the breaker of the tire (the length of the breaker in the tire width direction).

Herein, when the tire includes a plurality of breakers, the length of the breaker in the tire width direction refers to the length in the tire width direction of the breaker that is the longest in the tire width direction, among the plurality of breakers.

Herein, the tread contact width is defined as follows. First, a no-load and normal condition tire with a normal internal pressure mounted on a normal rim is contacted with a plane at a camber angle of 0 degrees while a normal load is applied to the tire, and then the axially outermost contact positions of the tire are each defined as a "contact edge Te". Then, the distance between the contact edges Te and Te in the tire axis direction is defined as the tread contact width TW. The dimensions and other characteristics of tire components are determined under the above normal conditions, unless otherwise stated.

The "normal rim" refers to a rim specified for each tire by the standards in a standard system including standards according to which tires are provided, and may be "standard rim" in JATMA, "design rim" in TRA, or "measuring rim" in ETRTO. The "normal internal pressure" refers to an air pressure specified for each tire by the standards in a standard system including standards according to which tires are provided, and may be "maximum air pressure" in JATMA, a maximum value shown in Table "TIRE LOAD LIMITS AT VARIOUS COLD INFLATION PRESSURES" in TRA, or "inflation pressure" in ETRTO. In the case of tires for passenger vehicles, the normal internal pressure is 180 kPa.

The "normal load" refers to a load specified for each tire by the standards in a standard system including standards according to which tires are provided, and may be "maximum load capacity" in JATMA, a maximum value shown in Table "TIRE LOAD LIMITS AT VARIOUS COLD INFLATION PRESSURES" in TRA, or "load capacity" in ETRTO. In the case of tires for passenger vehicles, the normal load corresponds to 88% of the above-specified load.

The rotational speed of the tire during the application of the sealant is not limited. To more suitably achieve the advantageous effect, the rotational speed is preferably 5 m/min or higher, more preferably 10 m/min or higher, but is preferably 30 m/min or lower, more preferably 20 m/min or lower.

When a non-contact displacement sensor is used, the risk of troubles caused by adhesion of the sealant to the sensor can be reduced. Any non-contact displacement sensor that can measure the distance between the inner periphery of the tire and the tip of the nozzle may be used. Examples include laser sensors, photosensors, and capacitance sensors. These sensors may be used alone or in combinations of two or more. For measurement of rubber, laser sensors and photosensors are preferred among these, with laser sensors being more preferred. When a laser sensor is used, the distance between the inner periphery of the tire and the tip of the nozzle may be determined as follows: the inner periphery of the tire is irradiated with a laser; the distance between the inner periphery of the tire and the tip of the laser sensor is determined based on the reflection of the laser; and the distance between the tip of the laser sensor and the tip of the nozzle is subtracted from the determined distance.

The non-contact displacement sensor may be placed in any location that allows the measurement of the distance between the inner periphery of the tire and the tip of the nozzle before the application of the sealant. The sensor is preferably attached to the nozzle and more preferably in a location to which the sealant will not adhere.

Moreover, the number, size, and other conditions of the non-contact displacement sensor are not limited either.

Since the non-contact displacement sensor is vulnerable to heat, the sensor is preferably protected, e.g. with a heat insulator, and/or cooled, e.g. with air, to avoid the influence of heat from the hot sealant discharged from the nozzle. This improves the durability of the sensor.

Although the first embodiment has been described based on examples in which the tire, not the nozzle, is moved in the width and radial directions of the tire, the nozzle, not the tire, may be moved, or both the tire and the nozzle may be moved.

Moreover, the rotary drive device preferably includes a means to increase the width of a tire at a bead portion. In the application of the sealant to a tire, increasing the width of the tire at a bead portion allows the sealant to be easily applied to the tire. Particularly when the nozzle is to be introduced near the inner periphery of the tire mounted on the rotary drive device, the nozzle may be introduced only by parallel movement of the nozzle, which facilitates control and improves productivity.

Any means that can increase the width of a tire at a bead portion can be used as the means to increase the width of a tire at a bead portion. Examples include a mechanism in which two devices having a plurality of (preferably two) rolls which have a fixed positional relationship with each other are used, and the devices move in the tire width direction. The devices may be inserted from both sides through the opening of a tire into the inside of the tire and allowed to increase the width of the tire at a bead portion.

In the production method, since the sealant which has been mixed in, for example, a twin screw kneading extruder and in which the crosslinking reaction in the extruder is suppressed is directly applied to the tire inner periphery, the crosslinking reaction begins upon the application and the sealant adheres well to the tire inner periphery while the crosslinking reaction more suitably proceeds, so that a self-sealing tire having high sealing performance can be produced. Hence, the self-sealing tire with the sealant applied thereto does not need further crosslinking and thus provides good productivity.

The self-sealing tire with the sealant applied thereto may be further subjected to a crosslinking step, if necessary.

The self-sealing tire is preferably heated in the crosslinking step. This improves the rate of crosslinking of the sealant and allows the crosslinking reaction to more suitably proceed so that the productivity of self-sealing tires can be further enhanced. The tire may be heated by any method, including known methods, suitably using an oven. The crosslinking step may be carried out, for example, by placing the self-sealing tire in an oven at 70 to 190°C, preferably 150 to 190°C, for 2 to 15 minutes.

The tire is preferably rotated in the circumferential direction of the tire during the crosslinking because then flowing of even the just-applied, easily flowing sealant can be prevented and the crosslinking reaction can be accomplished without deterioration of uniformity. The rotational speed is preferably 300 to 1,000 rpm. More specifically, the oven used may be, for example, an oven equipped with a rotational mechanism.

Even when the crosslinking step is not additionally performed, the tire is preferably rotated in the circumferential direction of the tire until the crosslinking reaction of the sealant is completed. In this case, flowing of even the just-applied, easily flowing sealant can be prevented and the crosslinking reaction can be accomplished without deterioration of uniformity. The rotational speed is the same as described for the crosslinking step.

To improve the rate of crosslinking of the sealant, the tire is preferably previously warmed before the application of the sealant. This permits production of self-sealing tires with higher productivity. The temperature for pre-heating the tire is preferably 40°C or higher, more preferably 50°C or higher, but is preferably 100°C or lower, more preferably 70°C or lower. When the tire is pre-heated within the above temperature range, the crosslinking reaction suitably begins upon the application and more suitably proceeds so that a self-sealing tire having high sealing performance can be produced. Moreover, when the tire is pre-heated within the above temperature range, the crosslinking step is not necessary and thus the productivity of self-sealing tires can be enhanced.

In general, continuous kneading machines (especially twin screw kneading extruders) are continuously operated. In the production of self-sealing tires, however, tires need to be replaced one after another upon completion of the application of the sealant to one tire. Here, in order to produce higher quality self-sealing tires while reducing deterioration in productivity, the following method (1) or (2) may be used. The method (1) or (2) may be appropriately selected depending on the situation, in view of the following disadvantages: deterioration in quality in method (1) and an increase in cost in method (2).

(1) The feed of the sealant to the inner periphery of the tire is controlled by running or stopping the continuous kneading machine and all the feeders simultaneously.

More specifically, upon completion of the application to one tire, the continuous kneading machine and all the feeders may be simultaneously stopped to replace the tire with another tire, preferably within one minute, and then the continuous kneading machine and all the feeders may be simultaneously allowed to run to restart the application to the tire. By replacing tires quickly, preferably within one minute, the deterioration in quality can be reduced.

(2) The feed of the sealant to the inner periphery of the tire is controlled by switching flow channels while allowing the continuous kneading machine and all the feeders to keep running.

More specifically, the continuous kneading machine may be provided with another flow channel in addition to the nozzle for direct feeding to the tire inner periphery, and the prepared sealant may be discharged from the another flow channel after completion of the application to one tire until completion of the replacement of tires. Since the continuous kneading machine and all the feeders are kept running during the production of self-sealing tires, this method can produce self-sealing tires having higher quality.

Non-limiting examples of carcass cords that can be used in the carcasses of the above-described self-sealing tires include fiber cords and steel cords. Steel cords are preferred among these. In particular, steel cords formed of hard steel wire materials specified in JIS G 3506 are desirable. The use of strong steel cords, instead of commonly used fiber cords, as carcass cords in the self-sealing tires greatly improves side cut resistance (resistance to cuts in the tire side portions caused by driving over curbs or other reasons), thereby further improving puncture resistance of the entire tire including the side portions.

The steel cords may have any structure. Examples include steel cords having a 1 × n single strand structure, steel cords having a k + m layered strand structure, steel cords having a 1 × n bundle structure, and steel cords having an m × n multi-strand structure. The term "steel cord having a 1 × n single strand structure" refers to a single-layered twisted steel cord formed by intertwining n filaments. The term "steel cord having a k + m layered strand structure" refers to a steel cord having a two-layered structure in which the two layers are different from each other in twist direction and twist pitch, and the inner layer includes k filaments while the outer layer includes m filaments. The term "steel cord having a 1 × n bundle structure" refers to a bundle steel cord formed by intertwining bundles of n filaments. The term "steel cord having an m × n multi-strand structure" refers to a multi-strand steel cord formed by intertwining m strands produced by first twisting n filaments together. Here, n represents an integer of 1 to 27; k represents an integer of 1 to 10; and m represents an integer of 1 to 3.

The twist pitch of the steel cords is preferably 13 mm or less, more preferably 11 mm or less, but is preferably 5 mm or more, more preferably 7 mm or more.

The steel cords preferably each contain at least one preformed filament formed in the shape of a spiral. The inclusion of such a preformed filament can provide a relatively large gap within the steel cord to improve rubber permeability, and further can maintain the elongation under low load so that a molding failure can be prevented during vulcanization.

The surface of the steel cords is preferably plated with brass, Zn, or other materials to improve initial adhesion to the rubber composition.

The steel cords preferably have an elongation under a load of 50 N of 0.5 to 1.5%. The elongation under a load of 50 N is more preferably 0.7% or more but is more preferably 1.3% or less.

The endcount of the steel cords is preferably 20 to 50 (ends/5 cm).

### <Second embodiment>

It has been revealed that the use of the method according to the first embodiment alone has the following disadvantage: the sealant having a generally string shape is occasionally difficult to attach to an inner periphery of a tire and can easily peel off particularly at the attachment start portion. A second embodiment is characterized in that in the method for producing a self-sealing tire described above, the sealant is attached under conditions where the distance between the inner periphery of the tire and the tip of the nozzle is adjusted to a distance d₁ and then to a distance d₂ larger than the distance d₁. In this case, since the distance between the inner periphery of the tire and the tip of the nozzle is shortened at the beginning of the attachment, the width of the sealant corresponding to the attachment start portion is increased. Accordingly, a self-sealing tire can be easily produced in which a generally string-shaped adhesive sealant is continuously and spirally attached at least to an inner periphery of the tire that corresponds to a tread portion, and at least one of the longitudinal ends of the sealant forms a wider portion having a width larger than that of the longitudinally adjoining portion. In this self-sealing tire, a portion of the sealant that corresponds to the attachment start portion has a larger width to improve adhesion of this portion so that peeling of this portion of the sealant can be prevented.

The description of the second embodiment basically includes only features different from the first embodiment, and the contents overlapping the description of the first embodiment are omitted.

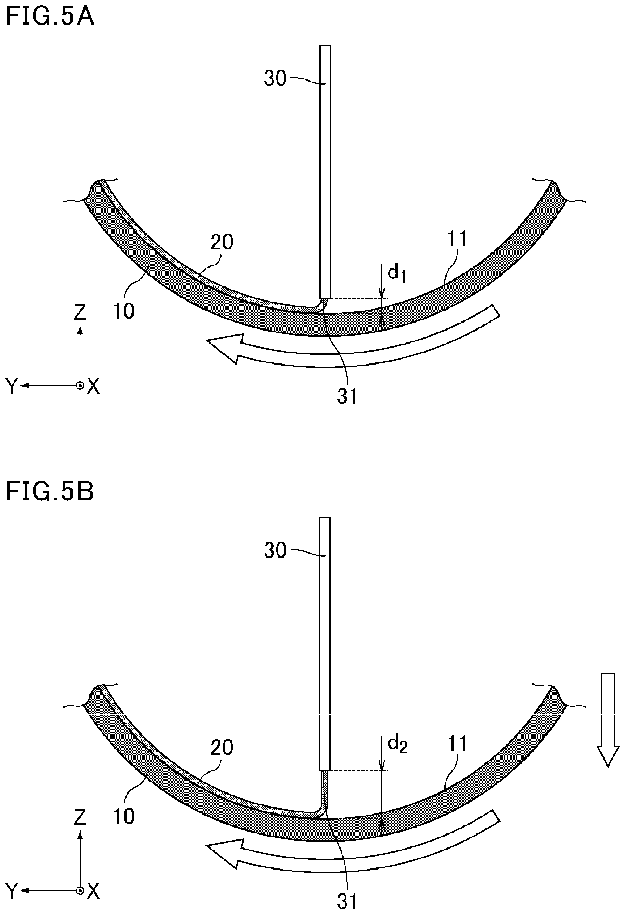

Figs. 5 are enlarged illustrations of the vicinity of the tip of the nozzle included in the applicator shown in Fig. 1. Fig. 5A illustrates that immediately after attachment of the sealant is started and Fig. 5B illustrates that after a lapse of a predetermined time.

Figs. 5 each show a cross-section of a part of a tire 10 taken along a plane including the circumferential and radial directions of the tire. In Figs. 5, the width direction (axis direction) of the tire is indicated by arrow X, the circumferential direction of the tire is indicated by arrow Y, and the radial direction of the tire is indicated by arrow Z.

According to the second embodiment, the tire 10 formed through a vulcanization step is first mounted on a rotary drive device, and a nozzle 30 is inserted into the inside of the tire 10. Then, as shown in Figs. 1 and 5, the tire 10 is rotated and simultaneously moved in the width direction while a sealant 20 is discharged from the nozzle 30, thereby continuously applying the sealant to an inner periphery 11 of the tire 10. The tire 10 is moved in the width direction according to, for example, the pre-entered profile of the inner periphery 11 of the tire 10.

Thus, the sealant 20, which is adhesive and has a generally string shape, is continuously and spirally attached to the inner periphery 11 of the tire 10 that corresponds to a tread portion.

In this process, as shown in Fig. 5A, the sealant 20 is attached under conditions where the distance between the inner periphery 11 of the tire 10 and the tip 31 of the nozzle 30 is adjusted to a distance d₁ for a predetermined time from the start of attachment. Then, after a lapse of the predetermined time, as shown in Fig. 5B, the tire 10 is moved in the radial direction to change the distance to a distance d₂ larger than the distance d₁ before the sealant 20 is attached.

The distance may be changed from the distance d₂ back to the distance d₁ before completion of the attachment of the sealant. However, in view of production efficiency and tire weight balance, the distance d₂ is preferably maintained until the sealant attachment is completed.

Also preferably, the distance d₁ is kept constant for a predetermined time from the start of attachment, and after a lapse of the predetermined time the distance d₂ is kept constant, although the distances d₁ and d₂ are not necessarily constant as long as they satisfy the relationship of d₁ < d₂.

The distance d₁ is not limited. To more suitably achieve the advantageous effect, the distance d₁ is preferably 0.3 mm or more, more preferably 0.5 mm or more, but is preferably 2 mm or less, more preferably 1 mm or less.

The distance d₂ is not limited either. To more suitably achieve the advantageous effect, the distance d₂ is preferably 0.3 mm or more, more preferably 1 mm or more, but is preferably 3 mm or less, more preferably 2 mm or less. The distance d₂ is preferably the same as the adjusted distance d₀ described above.

Herein, the distances d₁ and d₂ between the inner periphery of the tire and the tip of the nozzle each refer to the distance in the tire radial direction between the inner periphery of the tire and the tip of the nozzle.

The rotational speed of the tire during the attachment of the sealant is not limited. To more suitably achieve the advantageous effect, the rotational speed is preferably 5 m/min or higher, more preferably 10 m/min or higher, but is preferably 30 m/min or lower, more preferably 20 m/min or lower.

Self-sealing tires according to the second embodiment can be produced through the steps described above.

Fig. 6 is a schematic view illustrating an example of a sealant attached to a self-sealing tire according to the second embodiment.

A generally string-shaped sealant 20 is wound in the tire circumferential direction and continuously and spirally attached. Here, one of the longitudinal ends of the sealant 20 forms a wider portion 21 having a width larger than that of the longitudinally adjoining portion. The wider portion 21 corresponds to the attachment start portion of the sealant.

The width of the wider portion of the sealant (the width of the wider portion of the applied sealant, length indicated by W₁ in Fig. 6) is not limited. To more suitably achieve the advantageous effect, the width of the wider portion is preferably 103% or more, more preferably 110% or more, still more preferably 120% or more of the width of the sealant other than the wider portion (length indicated by W₀ in Fig. 6). The width of the wider portion of the sealant is also preferably 210% or less, more preferably 180% or less, still more preferably 160% or less of the width of the sealant other than the wider portion.

The width of the wider portion of the sealant is preferably substantially constant in the longitudinal direction but may partially be substantially non-constant. For example, the wider portion may have a shape in which the width is the largest at the attachment start portion and gradually decreases in the longitudinal direction. Herein, the substantially constant width means that the variation of the width is within a range of 90 to 110%, preferably 97 to 103%, more preferably 98 to 102%, still more preferably 99 to 101%.

The length of the wider portion of the sealant (the length of the wider portion of the applied sealant, length indicated by L₁ in Fig. 6) is not limited. To more suitably achieve the advantageous effect, the length is preferably less than 650 mm, more preferably less than 500 mm, still more preferably less than 350 mm, particularly preferably less than 200 mm. The length of the wider portion of the sealant is preferably as short as possible. However, from the standpoint of controlling the distance between the inner periphery of the tire and the tip of the nozzle, the lower limit of the length of the wider portion is about 10 mm.

The width of the sealant other than the wider portion (the width of the applied sealant other than the wider portion, length indicated by W₀ in Fig. 6) is not limited. To more suitably achieve the advantageous effect, the width is preferably 0.8 mm or more, more preferably 1.3 mm or more, still more preferably 1.5 mm or more, but is preferably 18 mm or less, more preferably 13 mm or less, still more preferably 9.0 mm or less, particularly preferably 7.0 mm or less, most preferably 6.0 mm or less, even most preferably 5.0 mm or less. W₀ is preferably the same as the above-described W.

The width of the sealant other than the wider portion is preferably substantially constant in the longitudinal direction but may partially be substantially non-constant.

The width of the area where the sealant is attached (hereinafter also referred to as the width of the attachment area or the sealant layer, and corresponding to a length equal to W₁ + 6 × W₀ in Fig. 6) is not limited. To more suitably achieve the advantageous effect, the width is preferably 80% or more, more preferably 90% or more, still more preferably 100% or more, but preferably 120% or less, more preferably 110% or less, of the tread contact width.

To more suitably achieve the advantageous effect, the width of the sealant layer is preferably 85 to 115% of the width of the breaker of the tire (the length of the breaker in the tire width direction).

In the self-sealing tires according to the second embodiment, the sealant is preferably attached without overlapping in the width direction and more preferably without gaps.

Moreover, in the self-sealing tires according to the second embodiment, the other longitudinal end (the end corresponding to the attachment ending portion) of the sealant may also form a wider portion having a width larger than that of the longitudinally adjoining portion.

The thickness of the sealant (the thickness of the applied sealant or the sealant layer, length indicated by D in Fig. 8) is not limited. To more suitably achieve the advantageous effect, the thickness of the sealant is preferably 1.0 mm or more, more preferably 1.5 mm or more, still more preferably 2.0 mm or more, particularly preferably 2.5 mm or more, but is preferably 10 mm or less, more preferably 8.0 mm or less, still more preferably 5.0 mm or less.

The thickness of the sealant (the thickness of the applied sealant or the sealant layer) is preferably substantially constant. In this case, the deterioration of tire uniformity can be further prevented to produce a self-sealing tire having a much better weight balance.

The ratio of the thickness of the sealant (the thickness of the applied sealant or the sealant layer, length indicated by D in Fig. 8) to the width of the sealant other than the wider portion (the width of the applied sealant other than the wider portion, length indicated by W₀ in Fig. 6) (thickness of sealant/width of sealant other than wider portion) is preferably 0.6 or higher, more preferably 0.7 or higher, still more preferably 0.8 or higher, particularly preferably 0.9 or higher, but is preferably 1.4 or lower, more preferably 1.3 or lower, still more preferably 1.2 or lower, particularly preferably 1.1 or lower. With a ratio closer to 1.0, the sealant has an ideal string shape which permits production of a self-sealing tire having high sealing performance with higher productivity.

To more suitably achieve the advantageous effect, the cross-sectional area of the sealant (the cross-sectional area of the applied sealant, area calculated by D × W in Fig. 8) is preferably 0.8 mm² or more, more preferably 1.95 mm² or more, still more preferably 3.0 mm² or more, particularly preferably 3.75 mm² or more, but is preferably 180 mm² or less, more preferably 104 mm² or less, still more preferably 45 mm² or less, particularly preferably 35 mm² or less, most preferably 25 mm² or less.

According to the second embodiment, even when the sealant has a viscosity within the range indicated earlier, and particularly when it has a relatively high viscosity, widening a portion of the sealant that corresponds to the attachment start portion improves adhesion of this portion so that peeling of this portion of the sealant can be prevented.

The self-sealing tires according to the second embodiment are preferably produced as described above. However, they may be produced by any other appropriate method as long as at least one of the ends of the sealant is allowed to form a wider portion.

The above descriptions, and particularly the description of the first embodiment, explain the cases where a non-contact displacement sensor is used in applying the sealant to the inner periphery of the tire. However, the sealant may be applied to the inner periphery of the tire while controlling the movement of the nozzle and/or tire according to the pre-entered coordinate data, without measurement using a non-contact displacement sensor.

Self-sealing tires including a sealant layer formed from any of the above-described sealant rubber compositions, that is located radially inside an innerliner may be produced as described above or by other methods. Since the sealant layer in the pneumatic tires is formed from any of the sealant rubber compositions, it has excellent fracture properties, good sealing performance after aging, and a reduced change in fracture properties over time.

Preferably, the sealant layer includes a generally string-shaped sealant provided continuously and spirally along an inner periphery of the tire. More preferably, the turns of the spiral of the generally string-shaped sealant are placed without overlapping in the width direction and without gaps.

The self-sealing tires having the above structure have an inner periphery provided with a sealant layer in which a sealant is uniformly provided in the tire circumferential and width directions (especially in the tire circumferential direction) (a sealant layer including a generally string-shaped sealant provided continuously and spirally along an inner periphery of the tire), and thus are excellent in sealing performance. Moreover, the tires are less likely to suffer sealant-induced imbalance, and therefore the deterioration of tire uniformity can be reduced.

Furthermore, when the sealant layer formed from any of the sealant rubber compositions has the above structure, the advantageous effect tends to be more suitably achieved. This is believed to be because a uniform thickness of the sealant layer is secured, and therefore the advantageous effect can be more suitably achieved.

The above structure of the sealant layer may be produced, for example, by continuously and spirally applying a generally string-shaped sealant to an inner periphery of a tire.

The sealant layer preferably has a complex modulus G* of 0.75 to 3.50 kPa as measured at 100°C in accordance with ISO 13145 (2012). The G* is more preferably 1.00 kPa or higher, still more preferably 1.25 kPa or higher, particularly preferably 1.50 kPa or higher, most preferably 1.75 kPa or higher, even most preferably 2.00 kPa or higher, further most preferably 2.20 kPa or higher, particularly most preferably 2.30 kPa or higher, but is more preferably 3.25 kPa or lower, still more preferably 3.00 kPa or lower, particularly preferably 2.80 kPa or lower, most preferably 2.60 kPa or lower. When the G* is within the range indicated above, the advantageous effect tends to be more suitably achieved.

Herein, the complex modulus G* is measured at 100°C in accordance with ISO 13145 (2012) and specifically as described in EXAMPLES.

The sealant layer having a complex modulus G* within the range indicated above may be formed from any of the above-described sealant rubber compositions. Specifically, it is sufficient to incorporate a predetermined amount of zinc oxide and a predetermined amount of liquid polymer(s) into a butyl-based rubber(s).

More specifically, it is sufficient to incorporate a predetermined amount of zinc oxide and a predetermined amount of liquid polybutene(s) into a butyl-based rubber(s).

Here, it is preferred not to use thiuram vulcanization accelerators, dithiocarbamate vulcanization accelerators, and sulfur.

The tires can be suitably used as, for example, tires for passenger vehicles, large passenger vehicles, large SUVs, trucks and buses, or two-wheeled vehicles, racing tires, winter tires (studless winter tires, cold weather tires, snow tires, studded tires), all-season tires, run-flat tires, aircraft tires, or mining tires.

### EXAMPLES

The present invention will be specifically described with reference to, but not limited to, examples below.

The chemicals used in the examples are listed below.

Butyl rubber: Bromobutyl 2255 (available from Exxon Mobil Corporation, Mooney viscosity ML₁₊₈ at 125°C: 46, halogen content: 2.0% by mass)

Carbon black: DIABLACK H (available from Mitsubishi Chemical Corporation, N330)

Liquid polybutene: Nisseki polybutene HV1900 (available from ENEOS Corporation, kinematic viscosity at 40°C: 160,000 cSt, kinematic viscosity at 100°C: 3,710 cSt, number average molecular weight: 2,900)

Tackifier: Quitone A100 (available from Zeon Corporation, aliphatic petroleum resin)

MBTS: NOCCELER DM-P (available from Ouchi Shinko Chemical Industrial Co., Ltd., dibenzothiazyldisulfide (MBTS))

DPG: NOCCELER D (available from Ouchi Shinko Chemical Industrial Co., Ltd., diphenylguanidine)

BBS: NOCCELER NS-P (available from Ouchi Shinko Chemical Industrial Co., Ltd., N-tert-butyl-2-benzothiazolylsulfenamide)

TBzTD: Sanceler TBzTD (available from Sanshin Chemical Industry Co., Ltd., tetrabenzylthiuram disulfide (TBzTD))

PZ: Accel PZ (available from Kawaguchi Chemical Industry Co., Ltd., zinc dimethyldithiocarbamate (ZnMDC))

Zinc oxide: zinc oxide #2 (available from Mitsui Mining & Smelting Co., Ltd.)

Stearic acid: TSUBAKI (available from NOF Corporation)

Sulfur: GOLDEN FLOWER SULFUR POWDER (available from Tsurumi Chemical Industry, Co., Ltd.)

### <Production of self-sealing tire>

A sealant was prepared by kneading at 170°C for 60 minutes in a 3 L kneader mixer according to the recipe indicated in Table 1.

Next, the tip of a nozzle directly connected to the outlet of the mixer was placed at the inner surface of a tire, and the sequentially prepared sealant (temperature: 170°C, viscosity at 40°C: 35,000 Pa·s, a generally sting shape with a thickness of 3 mm and a width of 4 mm) was discharged from the nozzle to the inner surface of the tire (205/55R16, preheated at 40°C) rotating in the circumferential direction, to continuously and spirally apply the sealant to an inner periphery of the tire such that the thickness was 3 mm and the width of the attachment area was 180 mm, as shown in Figs. 1 to 4, thereby forming a sealant layer. Thus, a self-sealing tire was produced. The viscosity of the sealant was measured at 40°C using a rotational viscometer in accordance with JIS K 6833.

Here, the heat generated during the kneading was used to allow the crosslinking curing reaction to proceed.

The test tires prepared as above were evaluated as described below. Table 1 shows the results.

### <Heat aging test>

The test tires were stored at 60°C for 20 days to obtain heat-aged test tires.

### <Kinematic complex modulus>

Specimens were cut out from the sealant layer of each self-sealing tire (new, heat-aged). Then, the kinematic complex modulus G* of the specimens was measured at 100°C using RPA (Alpha Technologies) in accordance with ISO 13145

(2012). Further, the rate (%) of change (rate of change in G* after heat aging) was calculated from the G* values of the new and heat-aged tires. A rate of change closer to 100% indicates a more reduced change in fracture properties over time. The tires having a rate of change of 150% or lower were considered to have a reduced change in fracture properties over time.

The tires having, when new, a complex modulus G* of 0.75 kPa or higher were considered to have excellent fracture properties. Particularly the tires having, when new, a complex modulus G* of 0.80 kPa or higher were considered to have particularly excellent fracture properties.

### <Air sealing performance>

The self-sealing tires (new) were subjected to accelerated static aging at 60°C for 20 days. Then, the tires were subjected to nailing and de-nailing of 100 nails with a size of 5 mm ϕ × 30 mm length in a constant temperature room at -25°C to determine the air sealing success rate. A higher air sealing success rate indicates better sealing performance after aging and a more reduced decrease in sealing performance over time.

### <Shape retention>

The self-sealing tires (new) were subjected to accelerated static aging at 60°C for 20 days. Then, the shape retention of the sealant was evaluated such that the tires with an acceptable appearance were considered good, while the tires with an unacceptable appearance were considered poor.

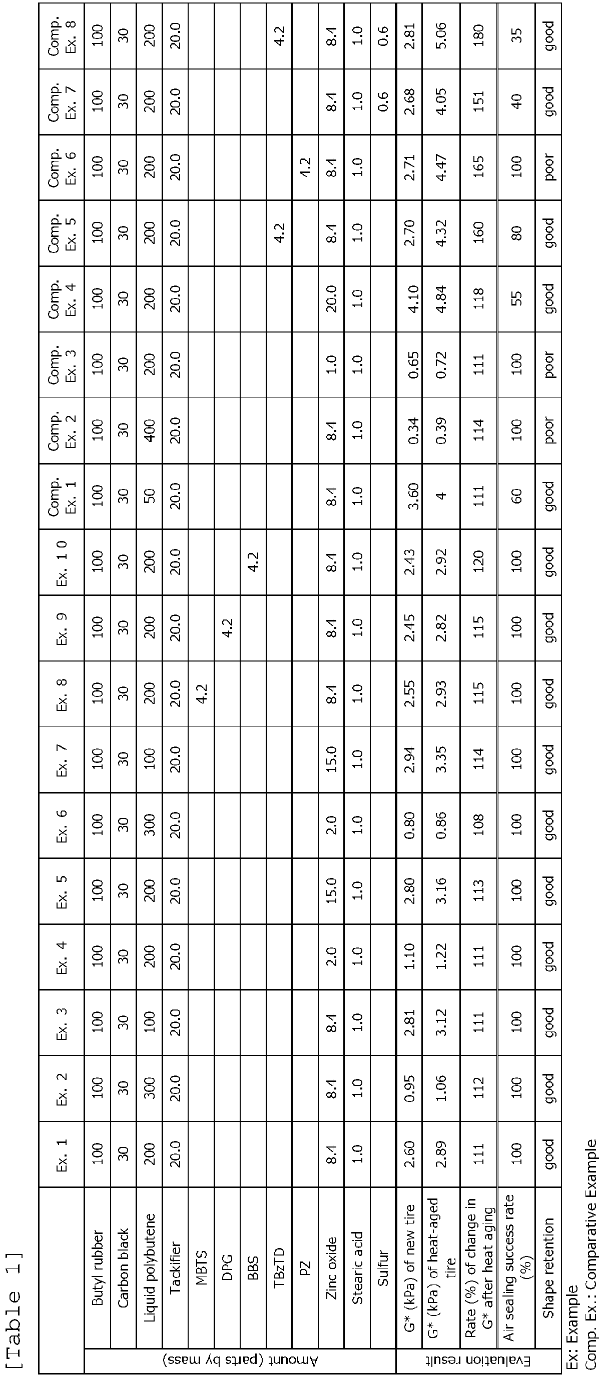

As shown in Table 1, excellent fracture properties, good sealing performance after aging, and reduced changes in fracture properties over time were exhibited in the examples which contained 100 parts by mass of at least one butyl-based rubber, 2 to 15 parts by mass of at least one zinc oxide, and 100 to 300 parts by mass of at least one liquid polymer and in which the amounts of thiuram vulcanization accelerators, dithiocarbamate vulcanization accelerators, and sulfur were each 0.1 parts by mass or less per 100 parts by mass of the at least one butyl-based rubber.

### REFERENCE SIGNS LIST

- 10:: tire
- 11:: inner periphery of tire
- 14:: tread portion
- 15:: carcass
- 16:: breaker
- 17:: band
- 20:: sealant
- 21:: wider portion
- 30:: nozzle
- 31:: tip of nozzle
- 40:: non-contact displacement sensor
- 50:: rotary drive device
- 60:: twin screw kneading extruder
- 61:: (61a, 61b, 61c) supply port
- 62:: material feeder
- d, d₀, d₁, d₂:: distance between inner periphery of tire and
- tip: of nozzle

## Claims

1. A sealant rubber composition, comprising: 100 parts by mass of at least one butyl-based rubber;
2 to 15 parts by mass of at least one zinc oxide; and
100 to 300 parts by mass of at least one liquid polymer,
wherein amounts of thiuram vulcanization accelerators, dithiocarbamate vulcanization accelerators, and sulfur are each 0.1 parts by mass or less per 100 parts by mass of the at least one butyl-based rubber.

2. The sealant rubber composition according to claim 1,
wherein the liquid polymer is at least one liquid polybutene.

3. The sealant rubber composition according to claim 1 or 2,
wherein the liquid polymer has a kinematic viscosity of 500 to 6,000 cSt as measured at 100°C in accordance with ASTM D445.

4. The sealant rubber composition according to any one of claims 1 to 3,
wherein an amount of organic peroxides is 1 part by mass or less per 100 parts by mass of the at least one butyl-based rubber.

5. A pneumatic tire, comprising a sealant layer formed from the rubber composition according to any one of claims 1 to 4.

6. The pneumatic tire according to claim 5,
wherein the sealant layer has a complex modulus G* of 0.75 to 3.50 kPa as measured at 100°C in accordance with ISO 13145.
